# EUROPÄISCHE PATENTSCHRIFT

(11) **EP 2 185 477 B1**
(45) Veröffentlichungstag und Bekanntmachung des Hinweises auf die Patenterteilung: **25.12.2013**
(21) Anmeldenummer: 08785072.3
(22) Anmeldetag: 25.07.2008
(51) Int. Cl.: C03B 5/235

(54) **GLASSCHMELZANLAGE UND VERFAHREN ZUM BETRIEB**
GLASS MELTING PLANT AND METHOD FOR OPERATING IT
INSTALLATION DE FUSION DE VERRE ET PROCÉDÉ DE FONCTIONNEMENT

(30) Priorität: 14.09.2007 DE 102007044043
(43) Veröffentlichungstag der Anmeldung: 19.05.2010
(73) Patentinhaber: Beteiligungen Sorg GmbH & Co. KG, 97816 Lohr am Main (DE)
(72) Erfinder: WAGNER, Manfred, 97816 Lohr am Main (DE); LINDIG, Matthias, 55218 Ingelheim (DE)
(74) Vertreter: KEIL & SCHAAFHAUSEN Patentanwälte
(86) Internationale Anmeldenummer: PCT/EP2008/006119
(87) Internationale Veröffentlichungsnummer: WO 2009/036837

(56) Entgegenhaltungen:
- EP-A- 1 634 856
- WO-A-97/36134
- US-A- 2 401 640
- US-A- 5 417 731

## Beschreibung

Die Erfindung betrifft eine Glasschmelzanlage mit einer Schmelzwanne, mit Brennern für fossile Brennstoffe und mit mindestens einem Regenerator zur Vorwärmung von Oxidationsgasen, wobei zwischen dem mindestens einen Regenerator und der Schmelzwanne mindestens zwei Brennerhälse für die alternierende Zufuhr von Oxidationsgasen und die Abfuhr von Verbrennungsgasen angeordnet sind, wobei die Brennerhälse mit seitlichen Zufuhröffnungen für die Zufuhr zusätzlicher Oxidationsgase versehen sind, und wobei die Bodenflächen der Brennerhälse frei von stufenförmigen Querschnittsveränderungen gestaltet sind.

Durch die DE 198 18 953 C1 ist es bei einem Glasschmelzofen mit Regeneratoren und alternativer Umkehr des Betriebs von Paaren von Brennerhälsen bekannt, zur Reduzierung des Gehalts an NOx und CO in den Abgasen in die Kammersockel der Regeneratoren, also unterhalb der Kammergitterung, über Gebläse Luft einzuführen, und zwar in einer solchen Menge, dass eine zumindest weitgehend stöchiometrische Nachverbrennung möglich ist. Dieses Verfahren setzt jedoch voraus, dass zuvor ein entsprechender Brennstoffüberschuss für die Nachverbrennung eingestellt wurde, denn im Kammersockel herrschen andernfalls wegen der vorherigen Wärmeabgabe an die Kammergitterung verhältnismässig niedrige Temperaturen. Folgerichtig ist auch angegeben, dass die Temperatur durch die Nachverbrennung auf mindestens 400 °C gesteigert wird und dass die Rückgewinnung der Energie durch die Hindurchleitung der Abgase durch einen Gutvorwärmer wiedergewonnen wird. Es ist ausserdem angegeben, dass sich die Bedingungen für eine Reduzierung sowohl von NOx als auch von CO diametral entgegenstehen.

Ähnliche überlegungen gelten auch für die DE 195 43 743 A1, bei der Luft für eine Nachverbrennung gleichfalls unterhalb der Kammergitterung der Regeneratoren eingespeist wird. Hier wird durch eine Matrix nach unten gerichteter Düsen eine Sperrwirkung gegen die aufsteigende Luft erzeugt, was erhebliche Eingriffe in die Konstruktion der Regeneratoren erforderlich macht.

Durch die DE 101 18 880 C2 und die entsprechende EP 1 251 105 B1 ist es bekannt, zur Vermeidung von Russ- und Grafitablagerungen ohne Erhöhung des NOx-Gehalts in den Abgasen von Glasschmelzöfen, in den Seitenwänden von alternierend betriebenen Paaren von Brennerhälsen Sekundärbrenner in Form von Düsenkombinationen für die Zufuhr von sekundärem Brenngas und Oxidantien während der Heizphase des betreffenden Brennerhalses vorzusehen, unter dem - in der üblichen Underport-Anordnung - die Primärbrenner angeordnet sind. Um die Breitenwirkung der Sekundärbrenner bzw. Sekundärflammen zu erhöhen, sind in den Brennerhälsen Stufen angeordnet, in denen die Sekundärflammen brennen. Es ist auch angegeben, dass in diese Brennerhälse während der Abzugsphase der in der Schmelzkammer verbrannten Gase auch weiterhin Oxidantien eingeleitet werden, allerdings ohne Brenngas. Die Praxis hat jedoch gezeigt, dass die Stufen ein Hindernis für eine Nachverbrennung eines vorhandenen Brennstoffüberschusses in den Abgasen sind, weil sich die Oxidantien nicht ausreichend mit den Abgasen mischen, sondern in die Schmelzkammer zurückströmen, womit ihr Einfluss auf eine Verminderung des schädlichen CO-Anteils in den Abgasen verloren geht.

Durch die DE 43 01 664 A1 ist es bei einem Glasschmelzofen mit Regeneratoren und alternativer Umkehr des Betriebs von Paaren von Brennerhälsen bekannt, zur Verkürzung des Flammenweges trotz einer Stufenverbrennung heisse Luft aus dem Oberteil eines im Heizbetrieb befindlichen Regenerators über die Schmelzwanne zu führen und oberhalb des gegenüberliegenden Brennerhalses entgegen der Abgasrichtung einzuspeisen. Einerseits wird dadurch aus einer anfangs unterstöchiometrischen Verbrennung in der zweiten Stufe eine stöchiometrische Verbrennung, andererseits erfolgt dadurch in dem Brennraum über der Glasschmelze eine gewollte, aber starke Verwirbelung, die einen störenden Einfluss auf die Primärflamme und die Wärmeverteilung hat.

Durch die US-PS 5,795,364 ist es bei einem Glasschmelzofen mit Regeneratoren und alternativer Umkehr des Betriebs von Paaren von Brennerhälsen bekannt, in die Brennerhälse in der Brennphase primären und in der Abzugphase sekundären Brennstoff einzudüsen, der als "reburn fuel" bezeichnet ist. Dieser sekundäre Brennstoff erzwingt eine intensive Nachverbrennung, wozu in der Abzugsphase in die oberen Kammern der Regeneratoren entgegen der Strömungsrichtung der Abgase Luft eingeblasen wird, um nachträglich durch Verwirbelung brennstoffarme Bedingungen zu erzeugen. Dies führt zu einer Brennstoffverschwendung, da die Rückgewinnung der Energie aus den Regeneratoren mit Verlusten verbunden ist.

Durch die DE 100 44 237 A1 und die entsprechende WO 02/02468 A1 ist es wiederum bekannt, zur Minderung des NOx-Gehalts in den Abgasen von Glasschmelzöfen in beiden Seitenwänden von Brennerhälsen, auch Brennluftports genannt, Brenner und ggf. auch Einlässe für Abgase anzuordnen und quer zum Strömungsweg der Brennluft sog. Flammenwurzelschilde anzuordnen, die einen Zwischenraum freilassen und durch die der Luftstrom turbulenzmindernd und abgasunterschichtend über Querströme hinwegströmen kann. Die Flammenwurzelschilde erzeugen Strömungsschatten und können sehr unterschiedliche Raumformen haben, und in bezug auf die Luftströmung und/oder quer hierzu keilförmig, pultdachförmig oder quaderförmig ausgebildet sein. In jedem Fall entstehen hierdurch in Abströmrichtung zwei scharfkantige Stufen. Diese Ausbildung macht erhebliche und kostspielige Eingriffe in die Wände und den Boden der aus keramischen Werkstoffen bestehenden Brennerhälse erforderlich, was auch im Hinblick auf das Herausschneiden von Material aus dem Boden beschrieben ist. Für eine Nachrüstung bereits vorhandener Brennerhälse ist diese Bauweise wenig geeignet. Die Rückströmung von Abgasen aus dem Brennraum über der Schmelzwanne bei alternierender Betriebsweise ist ebenso wenig beschrieben wie eine sekundäre Oxidation, und auch über den Einfluss auf den CO-Gehalt der Abgase finden sich keine Angaben.

Durch die US 6 047 565 B ist es bekannt, die Bodenflächen von Brennerhälsen von Glasschmelzanlagen sowohl mit Stufen als auch ohne Stufen auszubilden. Soweit Düsen in den Seitenwänden der Brennerhälse vorgesehen sind, dienen diese zum Injizieren von geringeren Anteilen des Brennstoffs zwischen etwa 5 bis 30% der Gesamtsmenge. Es ist nicht offenbart, dass durch diese Düsen auch während der Rückströmung der Verbrennungsgase ein Oxidant eingeleitet werden soll, und wenn dies geschähe, dann entstünde durch die spitzwinklige Ausrichtung auf den Ofeninnenraum ein Druckstau und damit eine Behinderung der Abströmung aus dem Ofeninnenraum, verbunden mit einer Veränderung der Stöchiometrie im Ofeninnenraum.

Durch die US 5 755 846 B ist es bekannt, sowohl in der Decke als auch in einer Seitenwand als auch im Boden von Brennerhälsen Düsen für die Einleitung von zusätzlichem Brennstoff vorzusehen, um im Ofenraum eine geschichtete Verbrennung von unter- und überstöchiometrischen Gasgemischen durchführen zu können. über die Eindüsung von sekundären Oxidantien ist nichts offenbart.

Durch die EP 1 634 856 A1 ist es bekannt, in jedem der gegenüber liegenden Brennerhälsen freischwebende Düsen anzuordnen, deren Mündungen auf den Ofenraum ausgerichtet sind und durch die auch während der Abzugsphase von Verbrennungsgasen Oxidantien in den Ofenraum eingedüst werden können. Dadurch entsteht jedoch auch hier eine Stauwirkung für die eigentliche Flammengase, und die Nachverbrennung ist auf den Ofeninnenraum beschränkt.

Durch die US 5 417 731 B ist es bekannt, sekundäre Oxidantien während der Abzugsphase in die Brennerhälse einzuleiten, um eine Nachverbrennung von Kohlenmonoxid zu erreichen. Durch die spitzwinklige Ausrichtung der Düsen in Richtung auf den Ofeninnenraum findet jedoch auch hier ein Druckstau und damit eine Behinderung der Abströmung der Verbrennungsgase aus dem Ofeninnenraum statt.

Durch die WO 97/36134 ist es bekannt, in den Seitenwänden von Brennerhälsen von Glasschmelzöfen in Strömungsrichtung hintereinander jeweils zwei Brenner anzuordnen, von denen der erste in der Heizphase unterstöchiometrisch und der nachfolgende Brenner überstöchiometrisch betrieben wird, um durch die Mischung der Flammengase in der Brennphase eine zumindest weitgehend stöchiometrische Verbrennung über der Glasschmelze zu erzielen. Die Achse des ersten Brenners kann dabei rechtwinklig in den jeweiligen Brennerhals einmünden. In diese Brenner kann dabei in der Rückströmphase der Abgase zu den Regeneratoren auch Luft eingeleitet werden. Diese Luft ist jedoch nicht zur Nachverbrennung restlicher Brenngase im Brennerhals vorgesehen. Vielmehr ist das Innenrohr des Brenners, durch das die Luft zugeführt wird, an der Brennermündung durch eine Luftkappe mit einem Spindelantrieb verschliessbar, und es ist ausgeführt, dass dadurch die Luft zur Kühlung des Brenners und zur Reinigung des Brennerblocks verwirbelt wird. Schon dieser Effekt des Verwirbelns ("swirl") steht einem Eindringen der Luftströmung in den Brennerhals diametral entgegen. Der Grund hierfür ist dem Brückenabsatz der Seiten 8/9, dem Anspruch 14 und der Figur 9 klar zu entnehmen: Das Regelelement für beide Gase ist einzig und allein die kegelförmige Luftkappe 34 am Ende des verstellbaren Rohres 40. Wird hierdurch in der Rückströmphase zum Regenerator das Brenngas abgestellt, so wird damit automatisch auch die Luftzufuhr in den Brennerhals unterbrochen. Der Brenner hat damit beide Funktionen verloren, und die Kühlluft kann nur durch die beiden kleinen radialen öffnungen neben dem Verbindungsstift in den Ringraum 39 eindringen und von hier aus durch einen radialen Ringspalt an die Atmosphäre. Dadurch hat die Kühlluft ihre Funktion als Oxidationsgas absolut verloren.

Durch die US 2 401 640 A ist es bekannt, in Brennerhälsen, die zwischen Regeneratoren und dem Ofenraum angeordnet sind, auf beiden Seiten liegende Düsen anzuordnen, die exakt aufeinander zu ausgerichtet sind, und durch die wahlweise Brennstoff, Luft oder einstellbare Gemische hieraus eingeleitet werden können. Diese Massnahme geschieht dazu, die Brennerleistungen entsprechend dem Abstand von der Beschickungsöffnung, dem sog. Dog-House, individuell einstellen zu können. Dies geschieht zu dem Zweck, in den Brennerhälsen Turbulenzen und Gasreibungen zu erzeugen, die eine normale aerodynamische Strömung behindern. Hierdurch sollen nicht nur die Gasversorgung, sondern auch die Längen der Flammen und damit die jeweilige Leistung im Ofen geregelt werden Die Eindüsung von Luft bei Umkehr der Strömung ist nicht offenbart.

Auch bei einer Zusammenschau des Standes der Technik bleiben folgende Probleme bestehen: Die Optimierung des Brenngas-Luft-Verhältnisses in Richtung auf eine nahstöchiometrische Verbrennung ist bei der Beheizung von Glasschmelzwannen mit fossilen Brennstoffen Stand der Technik. Die nahstöchiometrische Verbrennung garantiert eine optimale Flammentemperatur und Energieausnutzung. Von stöchiometrischer Verbrennung spricht man dann, wenn der Anteil an Verbrennungsluft so gewählt wird, dass der darin enthaltene Sauerstoff genau ausreicht, um die Kohlenwasserstoff-Moleküle des Brennstoffs vollständig zu den Reaktionsprodukten Wasser und Kohlendioxid umzusetzen. Dies geschieht oberhalb der Zündtemperatur des Brennstoffs exotherm, d.h. unter Abgabe von Wärme. Hierbei ist zu beachten, dass die beiden Reaktionsprodukte auch für die Wärmeübertragung verantwortlich sind.

Bei unter- und überstöchiometrischer Verbrennung entfernt man sich von dem optimalen Punkt der Energieausnutzung. Die nahstöchiometrische Verbrennung gilt auch als Primärmassnahme zur Reduzierung der NOx-Emission. In der Regel wird das Brennstoff-Luft-Verhältnis mit einer Messung des überschüssigen Sauerstoffs im Abgas gemessen. Der Sauerstoff-überschuss liegt dabei in der Regel um 0,5 %, bezogen auf trockenes Abgas im Normzustand.

Wegen der zunehmenden Zähigkeit der Gase bei hohen Temperaturen wird eine gute Vermischung der vorgewärmten Verbrennungsluft mit dem Brennstoff erschwert. Die vorgewärmte Luft, die der Verbrennung zugeführt wird, hat eine Temperatur von um die 1250 °C und damit eine Zähigkeit von 0,5*10⁻³ kg/ms. Das liegt in der Grössenordnung von Flüssigkeiten. Der Fachmann spricht in diesem Zusammenhang von "Strähnenbildung", wenn er den Abgasstrom in seiner messbaren, ungleichen Verteilung an Verbrennungsprodukten kritisiert. Gerade bei nahstöchiometrischer Verbrennung nimmt die Gefahr zu, dass man unweigerlich auch Kohlenmonoxid im Abgas findet, und zwar trotz eines messbaren geringen Anteils an Sauerstoff in dem Abgas.

Angesichts dieser Problematik könnte es nahegelegen haben, den Brennstoff so innig wie möglich zu einem frühen Zeitpunkt mit der Verbrennungsluft zu mischen, um so einen vollständigen Ausbrand zu gewährleisten. In der Praxis hat sich jedoch herausgestellt, dass mit einer Verwirbelung des Brennstoffs die Bildung von Stickoxiden zunimmt. Eine Verwirbelung hat also einen gegenteiligen und äusserst nachteiligen Effekt. Es hat sich nämlich gezeigt, dass eine stabile Flammenführung Voraussetzung für eine Feuerung mit niedriger Schadstoff-Emission ist.

Nach dem Stand der Technik waren bisher vornehmlich auf der Frischluftseite der regenerativen Verbrennung zusätzlich vor dem Brennraum Brennstoff und auch Oxidantien zugeführt worden, was unter der Bezeichnung "Kaskadenbefeuerung" bekannt geworden ist. Ein solches Verfahren zielt bekanntermaßen darauf hin, dass mit der Zufuhr eines Sekundärbrennstoffs vor der eigentlichen Verbrennung eine Flammenfront erzeugt wird, die sich über die eigentliche Primärflamme, die Hauptflamme, legt. Damit aber wird die Verbrennung des Hauptbrennstoffstroms verzögert. Diese Verzögerung hat im Bereich der Flammenwurzel eine unterstöchiometrische Mischung zur Folge und im Bereich des Flammenkerns eine Senkung der Temperaturen..Beide Effekte führen aber nur zu einer Reduzierung der NOx-Bildung.

Im weiteren Verlauf der Entwicklung hat sich gezeigt, dass es Vorteile bietet, die Eindüsung von Sekundärbrennstoff hinter einer Stufe im Brennerhals vorzunehmen (z.B. DE 101 18 880 C2). Damit wurde sichergestellt, dass der Sekundärbrennstoff sich über die gesamte Breite des Brennerhalses und der Luftzuführung verteilt. Die Stufe führte allerdings auch zu einer verstärkten Russbildung mit unerwünschten Russablagerungen im Bereich der zusätzlichen Brennstoffzuführung. Dieses Problem versuchte man dahingehend zu lösen, dass dem Sekundärbrennstoff auch ein geringer Anteil an Sekundärluft zugeführt wurde. Diese Sekundärluft diente ebenfalls als Oxidans, allerdings bevorzugt für die brennende Seite. Auf der abziehenden Seite wurde die Zufuhr des Sekundärbrennstoffs unterbrochen, die Zufuhr an Oxidantien aber beibehalten, um die Russablagerungen wieder zu beseitigen. In diesem Fall hat aber die Stufe eine deutlich kontraproduktive Wirkung, da sie eine Vermischung des Oxidans mit dem abziehenden Abgas erheblich behindert. Diese Massnahme hat sich also für eine effektive Reduzierung des CO-Anteils im Abgas nicht als vorteilhaft erwiesen: Das Oxidans wird von der Stufe daran gehindert, sich mit dem Abgas zu vermischen und eine Nachverbrennung zu ermöglichen.

Der Erfindung liegt daher die Aufgabe zugrunde, Mittel und Massnahmen anzugeben, durch die auch bereits vorhandene Brennerhälse auf einfachste Weise wirksam nach- und umgerüstet werden können, und durch die auch eine optimale Flammentemperatur bei guter Energieausnutzung erreichbar ist und die unvoll-ständig verbrannten bzw. oxidierten Anteile des Brennstoffs in den Abgasen aufoxidiert und dabei insbesondere der CO-Gehalt der Abgase verringert wird, ohne dass der NOₓ-Gehalt zunimmt und ohne dass ein Staueffekt in Richtung auf den Ofeninnenraum eintritt. Insbesondere sollen bauliche Massnahmen vermieden oder eingeschränkt werden, die einen Einstieg in die Brennerhälse erforderlich machen.

Die Lösung der gestellten Aufgabe erfolgt bei dem eingangs angegebenen Glasschmelzofen erfindungsgemäss dadurch, dass
a) die Zufuhröffnungen für die Zufuhr zusätzlicher Oxidationsgase auf den freien Querschnitt der Brennerhälse oberhalb der Bodenflächen ausgerichtet sind, dass
b) die Zufuhröffnungen für die Oxidationsgase über Rohrleitungen an Gebläse für Oxidationsgase angeschlossen sind, dass
c) die Zurfuhröffnungen für die Oxidationsgase rechtwinklig in die Brennhälse einmünden und dass
d) die Zuführöffnungen für die Oxidationsgase in einem Bereich, nahe der Mitte des Strömungsweges "S" zwischen den beiden Enden der Brennerhälse angeordnet sind.

Den Merkmalen b) und c) kommt in Kombination eine besondere Bedeutung zu. Unabhängig davon, ob in der Brennphase der zugehörigen Brenner oder in der Abzugsphase des betreffenden Brennerhalses ein Oxidationsgas eingedüst wird, hat dies in Bezug auf die möglichen Richtungskomponenten des eingedüsten Oxidationsgases einen neutralen Effekt: Es entsteht insbesondere in Richtung auf den Ofen-Innenraum kein Staueffekt, der die Abfuhr von Verbrennungsgasen behindern könnte, was mit einer Veränderung der Stöchiometrie im Ofeninnenraum verbunden wäre. Hierüber schweigt sich der gesamte, bisher im Verfahren befindliche Stand der Technik aus. Vielmehr wird in der US 5 417 731 B sogar das Gegenteil empfohlen, nämlich das Eindüsen des sekundären Oxidationsgases in einer Richtung auf den Ofen, entgegengesetzt zur Strömungsrichtung der Gase aus der Verbrennungsreaktion, die durch den Abzugskanal des Gassystems strömen.

Durch die Erfindung wird die gestellte Aufgabe in vollem Umfange gelöst, indem nämlich auch bereits vorhandene Brennerhälse auf einfachste Weise wirksam nach- und umgerüstet werden können, und durch die auch eine optimale Flammentemperatur bei guter Energieausnutzung erreichbar ist, wobei die unvollständig verbrannten bzw. oxidierten Anteile des Brennstoffs aufoxidiert und dabei insbesondere der CO-Gehalt der Abgase verringert wird, und wobei auch der CO-Gehalt der Abgase auf nahezu den Wert Null verringert wird, ohne dass der NOx-Gehalt zunimmt. Insbesondere werden bauliche Massnahmen vermieden oder eingeschränkt, die einen Einstieg in die Brennerhälse erforderlich machen.

Durch die Erfindung wird insbesondere eine erststufige Verbrennung im "nahstöchiometrischen Bereich" begünstigt, d.h. eine Verbrennung im Ofen, bei der im Abgas nur ein geringer Anteil an unverbrannten oder teilverbrannten Primärbrennstoffen verbleibt, die dann gleichfalls, zumindest überwiegend, in Abgase mit kaum noch messbaren CO-Anteilen umgesetzt werden. Dabei wird auch die Folge einer ungenügenden Vermischung von Gasen gelöst, die darauf zurückzuführen ist, dass die vorge-wärmte Verbrennungsluft für die Primärverbrennung bei einer üblichen Temperatur von ca. 1250 °C eine Zähigkeit von 0,5 * 10⁻³ kg/ms besitzt, wodurch im Gasgemisch eine Bildung von Strähnen oder Schlieren eintritt.

Insbesondere wird dadurch die Einhaltung der gesetzlichen Vorschriften bezüglich des CO-Gehalts im Abgas ohne zusätzliche Massnahmen ermöglicht: Das sich im Brennraum des Ofens bildende CO wird kurz hinter dem Brenn- oder Feuerungsraum aufoxidiert. In der Praxis lagen die Anteile an Kohlenmonoxid bei 100 mg/Nm³, und es sind auch Spitzenwerte bis 1000 mg/Nm³ bekannt geworden. Durch die Erfindung ist es gelungen, den Kohlenmonoxidgehalt bis auf nahezu Null zu reduzieren

Es ist im Zuge weiterer Ausgestaltungen der eingangs angegebenen Glasschmelzanlage besonders vorteilhaft, wenn - entweder einzeln oder in Kombination - :
* die Zufuhröffnungen für die Oxidationsgase in einem Bereich nahe der Mitte des Höhenabstandes zwischen den Bodenflächen und den Deckenflächen der Brennerhälse angeordnet sind,
* die Zufuhröffnungen für die Oxidationsgase Querschnittsflächen zwischen 20 und 350 cm³, vorzugsweise zwischen 50 und 80 cm³, besitzen,
* die Zufuhröffnungen für die Oxidationsgase von zylindrischen Wandflächen umgeben sind,
* die Zufuhröffnungen für die Oxidationsgase Durchmesser zwischen 50 und 200 mm, vorzugsweise zwischen 80 und 100 mm besitzen, und/oder, wenn
* die Zufuhröffnungen für die Oxidationsgase Längen zwischen 100 und 500 mm, vorzugsweise zwischen 300 und 400 mm, besitzen.

Die Erfindung betrifft auch ein Verfahren zum Betrieb von Glasschmelzanlagen mit einer Schmelzwanne, mit Brennern für fossile Brennstoffe und mit mindestens einem Regenerator zur Vorwärmung von Oxidationsgasen, wobei zwischen dem mindestens einen Regenerator und der Schmelzwanne mindestens zwei Brennerhälse für die alternierende Zufuhr von Oxidationsgasen und die Abfuhr von Verbrennungsgasen angeordnet sind, wobei die Brennerhälse mit seitlichen Zufuhröffnungen für die Zufuhr zusätzlicher Oxidationsgasen versehen sind, und wobei die Strömungen innerhalb der Brennerhälse stufenfrei geführt werden.

Zu Lösung der gleichen Aufgabe und zur Erzielung der gleichen Vorteile ist ein solches Verfahren dadurch gekennzeichnet, dass
a) die Zufuhr zusätzlicher Oxidationsgase in der Abfuhrphase der Verbrennungsgase auf den freien Querschnitt der Brennerhälse oberhalb der Bodenflächen ausgerichtet wird, dass
b) die zusätzlichen Oxidationsgase durch je ein Gebläse in die Brennhälse eingeleitet werden,
c) die Oxidationsgase rechtwinklig in die Strömung in den Brennhälsen eingeblasen werden und dass
d) die zusätzlichen Oxidationsgase in einem Bereich nahe der Mitte des Strömungsweges "S" zwischen den beiden Enden der Brennerhälse in diese eingeleitet werden.

Es ist im Zuge weiterer Ausgestaltungen des vorstehend angegebenen Verfahrens besonders vorteilhaft, wenn - entweder einzeln oder in Kombination - :
* die zusätzlichen Oxidationsgase in einem Bereich nahe der Mitte des Höhenabstandes zwischen den Bodenflächen und den Deckenflächen der Brennerhälse in diese eingeleitet werden,
* die zusätzlichen Oxidationsgase durch zylindrische Wandflächen in Düsensteinen in die Brennerhälse eingedüst werden,
* die zusätzlichen Oxidationsgase mit Strömungsgeschwindigkeiten zwischen 5 und 20 m/s, vorzugsweise zwischen 8 und 10 m/s zugeführt werden, und/oder, wenn
* die Menge der zusätzlichen Oxidationsgase zwischen 1 und 7 %, vorzugsweise zwischen 4 und 6 % der für die primäre Verbrennung notwendigen Menge an Oxidationsgasen gewählt wird.

Ein Ausführungsbeispiel des Erfindungsgegenstandes und dessen Wirkungsweisen und weitere Vorteile werden nachfolgend anhand der Figuren 1 bis 5 näher erläutert.

Es zeigen:
- Figur 1: einen Horizontalschnitt durch einen Regenerator mit zwei Kammern, durch zwei Brennerhälse und den Beschickungsteil einer Schmelzwanne,
- Figur 2: einen Vertikalschnitt durch einen der Brennerhälse,
- Figur 3: einen vergrösserten Horizontalschnitt durch einen der Brennerhälse gemäss Figur 1,
- Figur 4: einen Düsenstein mit einer Zufuhröffnung für die Zufuhr von Oxidationsgasen in die Brennerhälse in perspektivischer Darstellung, und
- Figur 5: einen Vertikalschnitt durch einen Wandausschnitt eines Brennerhalses mit eingebautem Düsenstein.

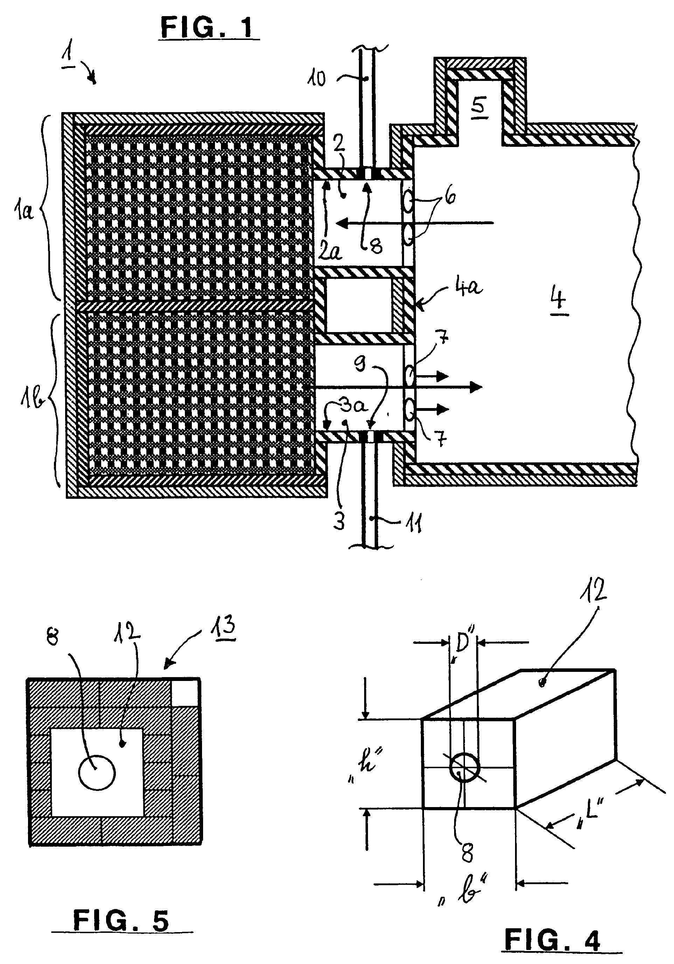

In Figur 1 ist ein Regenerator 1 mit zwei an sich bekannten Regeneratorblöcken 1a und 1b dargestellt, die über je einen Brennerhals 2 und 3 mit dem Beschickungsende einer Schmelzwanne 4 verbunden sind. Zur Beschickung mit dem Beschickungsgut, auch Gemenge genannt, dient ein sog. Doghouse 5, das ein Pendant auf der gegenüberliegenden Seite der Schmelzwanne 4 haben kann. Unterhalb der Brennerhälse 2 und 3 und knapp oberhalb des Inhalts der Schmelzwanne 4 befinden sich Brenner 6 und 7 für fossile Brennstoffe, wobei von den Brennern 6 und 7 nur die Mündungen dargestellt sind. Die Art der Befeuerung wird auch als Unterbank-Feuerung bezeichnet und ist gleichfalls bekannt.

Wie in Figur 1 gezeigt, herrscht in dem unteren Brennerhals 3 Heizbetrieb, und den Brenngasen wird aus dem Regeneratorblock 1b aufgeheiztes Oxidationsgas, in der Regel Luft, in Richtung des langen Pfeils zugeführt. Gleichzeitig strömt Verbrennungsgas nach Abgabe eines grossen Teils der Wärme an die Schmelzwanne 4 durch den anderen (oben dargestellten) Brennerhals 2 ab, wobei die zugehörigen Brenner 6 ausser Betrieb sind. Dieser Betrieb wird alternierend alle etwa 20 Minuten umgeschaltet. Diese Konstruktions- und Betriebsweise ist Stand der Technik, bespielsweise durch die DE 198 18 953 C1 der gleichen Anmelderin.

An dieser Stelle setzt nun die Erfindung ein: Jeder der Brennerhälse 2 und 3 besitzt in seiner äusseren Seitenwand 2a bzw. 3a je eine Zufuhröffnung 8 bzw. 9 für die Zufuhr zusätzlicher Oxidationsgase senkrecht in den freien Querschnitt der Brennerhälse 2 und 3. Jede dieser Zufuhröffnungen ist an eine Rohrleitung 10 bzw. 11 angeschlossen.

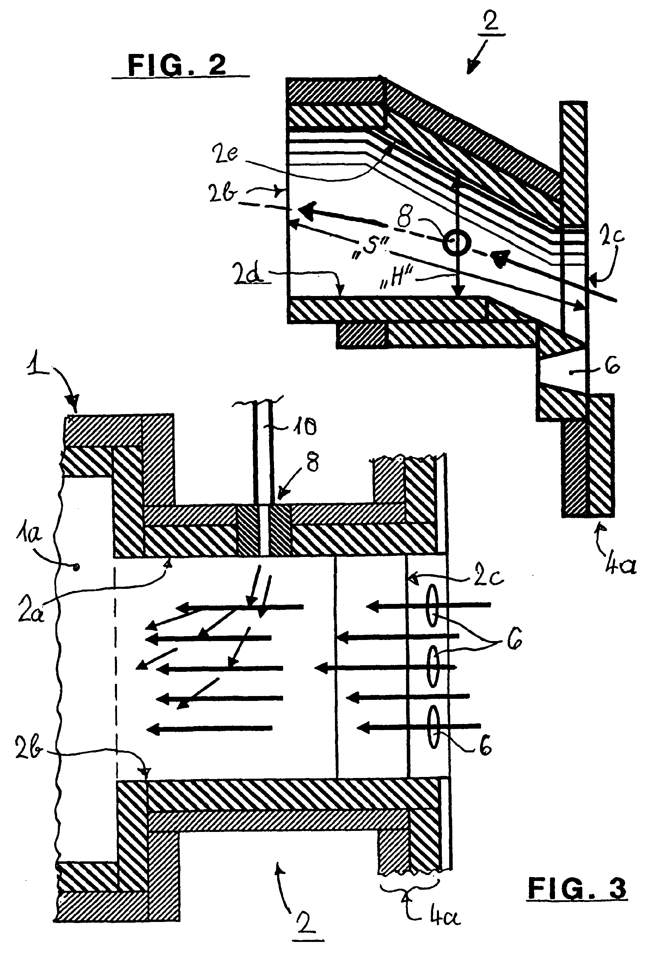

Aus Figur 2 geht - unter Verwendung bisheriger Bezugszeichen - folgendes hervor: Der Brennerhals besitzt ein linkes Ende 2b, das mit dem Regeneratorblock 1a verbunden ist, und ein rechtes Ende 2c, das über dem Rand 4a der Schmelzwanne 4 liegt. Es ist deutlich dargestellt, dass der Brennerhals 2 eine Bodenfläche 2d besitzt, die zwar leicht abgewinkelt, aber frei von stufenförmigen Querschnittsveränderungen ist, und dass die Zufuhröffnung 8 derart über der Bodenfläche 2d angeordnet ist, dass das zusätzliche Oxidationsgas aus der Zufuhröffnung 8 auf den freien Querschnitt des Brennerhalses 2 oberhalb dieser Bodenfläche 2d ausgerichtet ist. Dabei ist die Zufuhröffnung 8 in einem Bereich nahe der Mitte des Höhenabstandes "H" zwischen Bodenfläche 2d und der gewölbten Deckenfläche 2e angeordnet. Ferner ist die Zufuhröffnung 8 in einem Bereich in der Mitte des Strömungsweges "S" zwischen den beiden Enden 2b und 2c angeordnet.

Figur 3 zeigt, unter Weglassung der Kammergitterung im Regeneratorblock 1a, in der Zusammenschau mit Figur 2 folgendes: Die dicken Pfeile symbolisieren die Strömungsrichtung der Verbrennungsgase aus dem Wannenraum in Richtung auf den Regeneratorblock 1a, also in der Auslassphase. Durch die Zufuhröffnung 8 wird hierbei das zusätzliche Oxidationsgas - in der Regel durch Gebläse in die Rohrleitung 10 geförderte Umgebungsluft - mit einem solchen Impuls eingeblasen, dass sie sich in Richtung der dünnen Pfeile - also zunächst senkrecht und damit kräfteneutral - mit den Verbrennungsgasen vermischt und restliches Kohlenmonoxid oxidiert. Dieser Oxidationsvorgang kann sich bis in den Regeneratorblock 1 a fortsetzen.

Die Figuren 4 und 5 zeigen eine besonders vorteilhafte Ausbildung der Zufuhröffnungen 8 und 9: In einem quaderförmigen Düsenstein 12 aus einem hitzebeständigen mineralischen Werkstoff befindet sich als Zufuhröffnung 8 ein durchgehender Kanal, der von einer zylindrischen Wand mit dem Durchmesser "D" umgeben ist. Dieser kann zwischen 50 und 200 mm, vorzugsweise zwischen 80 und 100 mm, betragen. Die Länge "L" kann zwischen 300 und 400 mm betragen. Bei einem Durchmesser "D" von 80 mm wird die Höhe "h" vorteilhaft mit 200 mm und die Breite "b" gleichfalls mit 200 mm gewählt. Durch den Einbau gemäss Figur 5 in einen Block 13 mit Höhen und Breiten von jeweis 380 mm aus Steinen aus einem gleichfalls hitzebeständigen mineralischen Werkstoff ergibt sich ein Wandeinsatz, der sich auch nachträglich - einfach und kostengünstig - in eine bereits vorhandene Glasschmelzanlage einbauen lässt.

Durch Strömungsgeschwindigkeiten zwischen 5 und 20 m/s, vorzugsweise zwischen 8 und 10 m/s am Austritt der Zufuhröffnung 8 lassen sich ein genügend tiefes Eindringen des Oxidationsgases in den Strom von Verbrennungsgasen und eine zuverlässige Durchmischung und Verbrennung der Gase erreichen. Zweckmässig beträgt dabei die Menge der zusätzlichen Oxidationsgase zwischen 1 und 7 % der für die primäre Verbrennung über der Glasschmelze benötigten Oxidationsgase, was durch entsprechende Auslegung der hier nicht gezeichneten Gebläse in den Rohrleitungen 10 und 11 erreicht werden kann. Analoges gilt natürlich auch für den Brennerhals 3 mit entsprechendem Zeitversatz.

Die Figur 1 zeigt die Verhältnisse in einer sog. U-Flammenwanne, in der die Strömung der Brenngase über der Glasschmelze um 180 Grad gewendet wird. Die Erfindung lässt sich jedoch mit den gleichen Vorteilen auch bei sog. Querflammenwannen einsetzen, bei denen die paarweise zusammenwirkenden Brennerhälse in gegenüberliegenden Seitenwänden der Wanne angeordnet sind.

### Bezugszeichenliste:

- 1: Regenerator
- 1a: Regeneratorblock
- 1b: Regeneratorblock
- 2: Brennerhals
- 2a: Seitenwand
- 2b: Ende
- 2c: Ende
- 2d: Bodenfläche
- 2e: Deckenfläche
- 3: Brennerhals
- 3a: Seitenwand
- 4: Schmelzwanne
- 4a: Rand
- 5: Doghouse
- 6: Brenner
- 7: Brenner
- 8: Zufuhröffnung
- 9: Zufuhröffnung
- 10: Rohrleitung
- 11: Rohrleitung
- 12: Düsenstein
- 13: Block

- "b": Breite
- "D": Durchmesser
- "H": Höhenabstand
- "h": Höhe
- "S": Strömungsweg
- "L": Länge

## Patentansprüche

1. Glasschmelzanlage mit einer Schmelzwanne (4), mit Brennern (6, 7) für fossile Brennstoffe und mit mindestens einem Regenerator (1) zur Vorwärmung von Oxidationsgasen, wobei zwischen dem mindestens einen Regenerator (1) und der Schmelzwanne (4) mindestens zwei Brennerhälse (2, 3) für die alternierende Zufuhr von Oxidationsgasen und die Abfuhr von Verbrennungsgasen angeordnet sind, wobei die Brennerhälse (2, 3) mit seitlichen Zufuhröffnungen (8, 9) für die Zufuhr zusätzlicher Oxidationsgase versehen sind, und wobei die Bodenflächen (2d) der Brennerhälse (2, 3) frei von stufenförmigen Querschnittsveränderungen gestaltet sind, **dadurch gekennzeichnet, dass**
a) die Zufuhröffnungen (8, 9) für die Zufuhr zusätzlicher Oxidationsgase auf den freien Querschnitt der Brennerhälse (2, 3) oberhalb der Bodenflächen (2d) ausgerichtet sind, dass
b) die Zufuhröffnungen (8, 9) für die Oxidationsgase über Rohrleitungen (11, 12) an Gebläse für Oxidationsgase angeschlossen sind, dass
c) die Zufuhröffnungen (8, 9) für die Oxidationsgase rechtwinklig in die Brennerhälse (2, 3) einmündenund dass
d) die Zufuhröffnungen (8, 9) für die Oxidationsgase in einem Bereich nahe der Mitte des Strömungsweges ("S") zwischen den beiden Enden (2b, 2c) der Brennerhälse (2, 3) angeordnet sind.

2. Glasschmelzanlage nach Anspruch 1, **dadurch gekennzeichnet, dass** die Zufuhröffnungen (8, 9) für die Oxidationsgase in einem Bereich nahe der Mitte des Höhenabstandes ("H") zwischen den Bodenflächen (2d) und den Deckenflächen (2e) der Brennerhälse (2, 3) angeordnet sind.

3. Glasschmelzanlage nach Anspruch 1, **dadurch gekennzeichnet, dass** die Zufuhröffnungen (8, 9) für die Oxidationsgase Querschnittsflächen zwischen 20 und 350 cm² besitzen.

4. Glasschmelzanlage nach Anspruch 3, **dadurch gekennzeichnet, dass** die Zufuhröffnungen (8, 9) für die Oxidationsgase Querschnittsflächen zwischen 50 und 80 cm² besitzen.

5. Glasschmelzanlage nach Anspruch 1, **dadurch gekennzeichnet, dass** die Zufuhröffnungen (8, 9) für die Oxidationsgase von zylindrischen Wandflächen umgeben sind.

6. Glasschmelzanlage nach Anspruch 5, **dadurch gekennzeichnet, dass** die Zufuhröffnungen (8, 9) für die Oxidationsgase Durchmesser ("D") zwischen 50 und 200 mm besitzen.

7. Glasschmelzanlage nach Anspruch 6, **dadurch gekennzeichnet, dass** die Zufuhröffnungen (8, 9) für die Oxidationsgase Durchmesser ("D") zwischen 80 und 100 mm besitzen.

8. Glasschmelzanlage nach Anspruch 1, **dadurch gekennzeichnet, dass** die Zufuhröffnungen (8, 9) für die Oxidationsgase Längen ("L") zwischen 100 und 500 mm besitzen.

9. Glasschmelzanlage nach Anspruch 1, **dadurch gekennzeichnet, dass** die Zufuhröffnungen (8, 9) für die Oxidationsgase Längen ("L") zwischen 300 und 400 mm besitzen.

10. Verfahren zum Betrieb von Glasschmelzanlagen mit einer Schmelzwanne (4), mit Brennern (6, 7) für fossile Brennstoffe und mit mindestens einem Regenerator (1) zur Vorwärmung von Oxidationsgasen, wobei zwischen dem mindestens einen Regenerator (1) und der Schmelzwanne (4) mindestens zwei Brennerhälse (2, 3) für die alternierende Zufuhr von Oxidationsgasen und die Abfuhr von Verbrennungsgasen angeordnet sind, wobei die Brennerhälse (2, 3) mit seitlichen Zufuhröffnungen (8, 9) für die Zufuhr zusätzlicher Oxidationsgase versehen sind, und wobei die Strömungen innerhalb der Brennerhälse (2, 3) stufenfrei geführt werden, **dadurch gekennzeichnet, dass**
a) die Zufuhr zusätzlicher Oxidationsgase in der Abfuhrphase der Verbrennungsgase auf den freien Querschnitt der Brennerhälse (2, 3) oberhalb der Bodenflächen (2d) ausgerichtet wird, dass
b) die zusätzlichen Oxidationsgase durch je ein Gebläse in die Brennerhälse (2, 3) eingeleitet werden, dass
c) die Oxidationsgase rechtwinklig in die Strömung in den Brennerhälsen (2, 3) eingeblasen werden und dass
d) die zusätzlichen Oxidationsgase in einem Bereich nahe der Mitte des Strömungsweges ("S") zwischen den beiden Enden (2b, 2c) der Brennerhälse (2, 3) in diese eingeleitet werden.

11. Verfahren nach Anspruch 10, **dadurch gekennzeichnet, dass** die zusätzlichen Oxidationsgase in einem Bereich nahe der Mitte des Höhenabstandes ("H") zwischen den Bodenflächen (2d) und den Deckenflächen (2e) der Brennerhälse (2, 3) in diese eingeleitet werden.

12. Verfahren nach Anspruch 10, **dadurch gekennzeichnet, dass** die zusätzlichen Oxidationsgase durch zylindrische Wandflächen in Düsensteinen (12) in die Brennerhälse (2, 3) eingedüst werden.

13. Verfahren nach Anspruch 10, **dadurch gekennzeichnet, dass** die zusätzlichen Oxidationsgase mit Strömungsgeschwindigkeiten zwischen 5 und 20 m/s zugeführt werden.

14. Verfahren nach Anspruch 13, **dadurch gekennzeichnet, dass** die zusätzlichen Oxidationsgase mit Strömungsgeschwindigkeiten zwischen 8 und 10 m/s zugeführt werden.

15. Verfahren nach Anspruch 10, **dadurch gekennzeichnet, dass** die Menge der zusätzlichen Oxidationsgase zwischen 1 und 7% der für die primäre Verbrennung notwendigen Menge an Oxidationsgasen gewählt wird.

16. Verfahren nach Anspruch 15, **dadurch gekennzeichnet, dass** die Menge der zusätzlichen Oxidationsgase zwischen 4 und 6% der für die primäre Verbrennung notwendigen Menge an Oxidationsgasen gewählt wird.

## Claims

1. A glass melting installation comprising a melting tank (4), burners (6, 7) for fossil fuels and at least one regenerator (1) for preheating oxidation gases, wherein at least two port necks (2, 3) are located between the at least one regenerator (1) and the melting tank (4) for alternately supplying oxidation gases and removing combustion gases, the part necks (2, 3) being provided with lateral supply openings (8, 9) for the supply of additional oxidation gases, and wherein the bottom surfaces (2d) of the port necks (2, 3) being designed without any step-like changes in the cross-section, **characterized in that**
a) the supply openings (8, 9) for the supply of additional oxidation gases are aligned with the free cross-sectional area of the port necks (2, 3) above the bottom surfaces (2d), **in that**
b) the supply openings (8, 9) for the oxidation gases are connected via pipelines (11, 12) to fans for oxidation gases, **in that**
c) the supply openings (8, 9) for the oxidation gases open at right angles into the port necks (2, 3), **and in that**
d) the supply openings (8, 9) for the oxidation gases are located in a region close to the middle of the flow path ("S") between the two ends (2b, 2c) of the port necks (2, 3).

2. The glass melting installation according to Claim 1, **characterized in that** the supply openings (8, 9) for the oxidation gases are located in a region close to the middle of the vertical distance ("H") between the bottom surfaces (2d) and the top surfaces (2e) of the port necks (2, 3).

3. The glass melting installation according to Claim 1, **characterized in that** the supply openings (8, 9) for the oxidation gases have cross-sectional areas of between 20 and 350 cm².

4. The glass melting installation according to Claim 3, **characterized in that** the supply openings (8, 9) for the oxidation gases have cross-sectional areas of between 50 and 80 cm².

5. The glass melting installation according to Claim 1, **characterized in that** the supply openings (8, 9) for the oxidation gases are surrounded by cylindrical wall surfaces.

6. The glass melting installation according to Claim 5, **characterized in that** the supply openings (8, 9) for the oxidation gases have diameters ("D") of between 50 and 200 mm.

7. The glass melting installation according to Claim 6, **characterized in that** the supply openings (8, 9) for the oxidation gases have diameters ("D") of between 80 and 100 mm.

8. The glass melting installation according to Claim 1, **characterized in that** the supply openings (8, 9) for the oxidation gases have lengths ("L") of between 100 and 500 mm.

9. The glass melting installation according to Claim 1, **characterized in that** the supply openings (8, 9) for the oxidation gases have lengths ("L") of between 300 and 400 mm.

10. A method of operating glass melting installations comprising a melting tank (4), burners (6, 7) for fossil fuels and at least one regenerator (1) for preheating oxidation gases, wherein at least two port necks (2, 3) are located between the at least one regenerator (1) and the melting tank (4) for alternately supplying oxidation gases and removing combustion gases, the port necks (2, 3) being provided with lateral supply openings (8, 9) for the supply of additional oxidation gases, and the flows being directed without any steps within the port necks (2, 3) **characterized in that**
a) in the phase involving removal of the combustion gases, the supply of additional oxidation gases is aligned with the free cross-sectional area of the port necks (2, 3) above the bottom surfaces (2d), **in that**
b) the additional oxidation gases are in each case introduced into the port necks (2, 3) by a fan, **in that**
c) the oxidation gases are blown into the port necks (2, 3) at right angles to the flow, **and in that**
d) the additional oxidation gases are introduced into the port necks (2, 3) in a region close to the middle of the flow path ("S") between the two ends (2b, 2c) of said port necks (2, 3).

11. The method according to Claim 10, **characterized in that** the additional oxidation gases are introduced into the port necks (2, 3) in a region close to the middle of the vertical distance ("H") between the bottom surfaces (2d) and the top surfaces (2e) of said port necks (2, 3).

12. The method according to Claim 10, **characterized in that** the additional oxidation gases are injected into the port necks (2, 3) through cylindrical wall surfaces in nozzle blocks (12).

13. The method according to Claim 10, **characterized in that** the additional oxidation gases are supplied at flow rates of between 5 and 20 m/s.

14. The method according to Claim 13, **characterized in that** the additional oxidation gases are supplied at flow rates of between 8 and 10 m/s.

15. The method according to Claim 10, **characterized in that** the quantity of the additional oxidation gases is between 1 and 7% of the quantity of oxidation gases needed for the primary combustion.

16. The method according to Claim 15, **characterized in that** the quantity of the additional oxidation gases is between 4 and 6% of the quantity of oxidation gases needed for the primary combustion.

## Revendications

1. Installation de fusion du verre avec une cuve de fusion (4), avec des brûleurs (6, 7) pour des combustibles fossiles et avec au moins un régénérateur (1) pour préchauffer des gaz d'oxydation, entre l'au moins un régénérateur (1) et la cuve de fusion (4) étant placés au moins deux cols de brûleurs (2, 3) pour l'alimentation alternée de gaz d'oxydation et pour l'évacuation de gaz de combustion, les cols de brûleurs (2, 3) étant munis d'orifices d'alimentation (8, 9) latéraux, pour alimenter des gaz d'oxydation supplémentaires et les surfaces des fonds inférieurs (2d) des cols de brûleurs (2, 3) étant conçues en étant libres de modifications étagées de la section transversale, **caractérisée en ce que**
a) les orifices d'alimentation (8, 9) pour alimenter des gaz d'oxydation supplémentaires sont alignés sur la section transversale libre des cols de brûleurs (2, 3), au-dessus des surfaces des fonds inférieurs (2d), **en ce que**
b) les orifices d'alimentations (8, 9) pour les gaz d'oxydation sont raccordés par l'intermédiaire de tuyauteries (11, 12) sur des soufflantes pour les gaz d'oxydation, **en ce que**
c) les orifices d'alimentation (8, 9) pour les gaz d'oxydation débouchent à angle droit dans les cols de brûleurs (2, 3), **en ce que**
d) les orifices d'alimentation (8, 9) pour les gaz d'oxydation sont placés dans une zone proche du centre du trajet d'écoulement (« S »), entre les deux extrémités (2b, 2c) des cols de brûleurs (2, 3).

2. Installation de fusion de verre selon la revendication 1, **caractérisée en ce que** les orifices d'alimentations (8, 9) pour les gaz d'oxydation sont placés dans une zone proche du centre de l'écart en hauteur (« H ») entre les surfaces des fonds inférieurs (2d) et les surfaces des fonds supérieurs (2e) des cols de brûleurs (2, 3).

3. Installation de fusion de verre selon la revendication 1, **caractérisée en ce que** les orifices d'alimentation (8, 9) pour les gaz d'oxydation présentent des surfaces de section transversale comprises entre 20 et 350 cm².

4. Installation de fusion de verre selon la revendication 3, **caractérisée en ce que** les orifices d'alimentation (8, 9) pour les gaz d'oxydation supplémentaires présentent des surfaces de section transversale comprises entre 50 et 80 cm².

5. Installation de fusion de verre selon la revendication 1, **caractérisée en ce que** les orifices d'alimentation (8, 9) pour les gaz d'oxydation sont entourés de surfaces de paroi cylindriques.

6. Installation de fusion de verre selon la revendication 5, **caractérisée en ce que** les orifices d'alimentation (8, 9) pour les gaz d'oxydation présentent des diamètres (« D ») compris entre 50 et 200 mm.

7. Installation de fusion de verre selon la revendication 6, **caractérisée en ce que** les orifices d'alimentation (8, 9) pour les gaz d'oxydation présentent des diamètres (« D ») compris entre 80 et 100 mm.

8. Installation de fusion de verre selon la revendication 1, **caractérisée en ce que** les orifices d'alimentation (8, 9) pour les gaz d'oxydation présentent des longueurs (« L ») comprises entre 100 et 500 mm.

9. Installation de fusion de verre selon la revendication 1, **caractérisée en ce que** les orifices d'alimentation (8, 9) pour les gaz d'oxydation supplémentaires présentent des longueurs (« L ») comprises entre 300 et 400 mm.

10. Procédé pour faire fonctionner des installations de fusion de verre avec une cuve de fusion (4), avec des brûleurs (6, 7) pour des combustibles fossiles et avec au moins un régénérateur (1) pour préchauffer des gaz d'oxydation, entre l'au moins un régénérateur (1) et la cuve de fusion (4) étant placés au moins deux cols de brûleurs (2, 3) pour l'alimentation alternée de gaz d'oxydation et pour l'évacuation de gaz de combustion, les cols de brûleurs (2, 3) étant munis d'orifices d'alimentation (8, 9) latéraux, pour alimenter des gaz d'oxydation supplémentaires et les flux à l'intérieur des cols de brûleurs (2, 3) étant conduits de manière non étagée, **caractérisé en ce que**
a) dans la phase d'évacuation des gaz de combustion, l'alimentation de gaz d'oxydation supplémentaires est orientée vers la section transversale libre des cols de brûleurs (2, 3), au-dessus des surfaces des fonds inférieurs (2d), **en ce que**
b) l'on introduit les gaz d'oxydation supplémentaires par l'intermédiaire de chaque fois une soufflante dans les cols de brûleurs (2, 3), **en ce que**
c) l'on insuffle les gaz d'oxydation supplémentaires à angle droit dans le flux dans les cols de brûleurs (2, 3) et **en ce que**
d) l'on introduit les gaz d'oxydation supplémentaires dans les cols de brûleurs (2, 3) dans une zone proche du centre du trajet d'écoulement (« S »), entre les deux extrémités (2b, 2c) de ceux-ci.

11. Procédé selon la revendication 10, **caractérisé en ce que** l'on introduit les gaz d'oxydation supplémentaires dans les cols de brûleurs (2, 3) dans une zone proche du centre de l'écart en hauteur (« H ») entre les surfaces des fonds inférieurs (2d) et les surfaces des fonds supérieurs (2e) de ceux-ci.

12. Procédé selon la revendication 10, **caractérisé en ce que** l'on injecte les gaz d'oxydation supplémentaires dans les cols de brûleurs (2, 3) par l'intermédiaire de surfaces de paroi cylindres, dans des blocs de brûleur (12).

13. Procédé selon la revendication 10, **caractérisé en ce que** l'on alimente les gaz d'oxydation supplémentaires à des vitesses d'écoulement comprises entre 5 et 20 m/s.

14. Procédé selon la revendication 13, **caractérisé en ce que** l'on alimente les gaz d'oxydation supplémentaires à des vitesses d'écoulement comprises entre 8 et 10 m/s.

15. Procédé selon la revendication 10, **caractérisé en ce que** l'on choisit la quantité des gaz d'oxydation supplémentaires entre 1 et 7% de la quantité de gaz d'oxydation nécessaire pour la combustion primaire.

16. Procédé selon la revendication 15, **caractérisé en ce que** l'on choisit la quantité des gaz d'oxydation supplémentaires entre 4 et 6% de la quantité de gaz d'oxydation nécessaire pour la combustion primaire.
